# EUROPÄISCHE PATENTSCHRIFT

(11) **EP 1 778 536 B1**
(45) Veröffentlichungstag und Bekanntmachung des Hinweises auf die Patenterteilung: **12.11.2008**
(21) Anmeldenummer: 06754459.3
(22) Anmeldetag: 20.06.2006
(51) Int. Cl.: B62D 25/08

(54) **MONTAGETRÄGER MIT RAHMENFÖRMIGEM AUFBAU**
INSTALLATION SUPPORT WITH A FRAME-SHAPED CONSTRUCTION
SUPPORT DE MONTAGE PRESENTANT UNE STRUCTURE EN FORME DE CADRE

(30) Priorität: 21.06.2005 DE 102005028834
(43) Veröffentlichungstag der Anmeldung: 02.05.2007
(73) Patentinhaber: HBPO GmbH Rixbecker Strasse 75 59557 Lippstadt, 59557 Lippstadt (DE)
(72) Erfinder: HEMMERSMEIER, Ralf, 59557 Lippstadt (DE)
(74) Vertreter: Elbertzhagen, Otto
(86) Internationale Anmeldenummer: PCT/EP2006/005907
(87) Internationale Veröffentlichungsnummer: WO 2006/136371

(56) Entgegenhaltungen:
- EP-A- 1 484 216
- DE-A1- 19 850 589

## Beschreibung

### Technisches Gebiet

Die Erfindung bezieht sich auf einen Montageträger für Frontendmodule von Personen- oder Kleinlastkraftwagen gemäß den Merkmalen des Oberbegriffs des Patentanspruchs 1.

### Stand der Technik

Ein solcher Montageträger stellt die zentrale Montageplattform für ein Frontendmodul von Personen- oder Kleinlastkraftwagen dar, an der die verschiedenen Einzelkomponenten des Frontendmoduls in Vormontage angebaut werden. Da Kraftfahrzeuge der in Rede stehenden Art einander ähnelnde Tragstrukturen haben, werden durchweg rahmenförmige Montageträger verwendet, die auch Luftleit- und Luftabdichtfunktionen für die notwendigen Kühlerkomponenten übernehmen. Dazu dient die am oberen Querträger des Montageträgers angeordnete Dichtrippe, welche an die vom Montageträger umschlossene Kühlluftdurchlaßfläche angrenzt.

Der obere Querträger des Montageträgers ist in den meisten Fällen für die Aufnahme des Haubenschlosses des betreffenden Kraftfahrzeugs vorgesehen, hier kommt es auf eine sichere Verriegelung der Fahrzeug-Fronthaube an. Schon im normalen Fahrbetrieb müssen große äußere auf die Haube wirkende Kräfte in den oberen Querträger des Montageträgers eingeleitet werden, von wo sie über den Montageträger in die Tragstruktur des Kraftfahrzeugs abgeleitet werden.

Hierbei dürfen nur sehr geringe elastische Verformungen im oberen Querträger des Montageträgers auftreten, der im Hinblick auf Steifigkeit und Festigkeit ausreichend dimensioniert sein muß. Im extremen Belastungsfall bei einer Crashsituation des Fahrzeugs sind noch größere Kräfte über das Haubenschloß vom Montageträger aufzunehmen, die aus Sicher-, heitsgründen nicht zu einem Abreißen des Haubenschlosses vom Montageträger führen dürfen.

Dementsprechend muß der obere Querträger des Montageträgers, der als Schloßquerträger fungiert, mit einem Trägheitsmoment versehen sein. Dies gilt unabhängig davon, ob der obere Querträger als reines Kunststoffteil oder als Hybridteil aus einem Metall-Kunststoff-Verbund ausgeführt ist. Die Problematik hierbei ist, daß eine ausreichende Steifigkeit dieses Querträgers bei zugleich zu realisierender Gewichtsminimierung nur durch eine größere Bauhöhe in der Hauptbelastungsrichtung erreicht werden kann. Vor allem dann, wenn auf eine Mittelstrebe zur Abstützung des oberen Querträgers am unteren Querträger verzichtet werden muß, kommt man auch bei günstigen Profilformen zu einer Bauhöhe des oberen Querträgers, die zu einer Überdeckung des oberen Teils der Kühlerkomponenten führt und damit die theoretisch mögliche Wärmeübertragungsfläche reduziert.

Aus dem Dokument DE 198 50 589 A1 ist ein Frontmodul für ein Kraftfahrzeug mit einem Modulquerträger bekannt, welcher sich oberhalb der Kühlluftdurchlaßfläche befindet.

Dieser obere Querträger ist an seiner unteren, zur Kühlluftdurchlaßfläche hin liegenden Seite mittels eines fachwerkartigen Kunststoffgußprofils verstärkt, welches zugleich zur Luftführung dient und entsprechende Luftführungskanäle aufweist. Der hier hindurchströmende Fahrtwind kann zu einem Frischlufteinlaß einer Heizungs- und Klimaanlage des betreffenden Fahrzeugs geführt werden, er steuert jedenfalls keinen Anteil zu der durch den Kühlluftdurchlaß hindurchströmenden Kühlluft bei.

### Die Erfindung

Der Erfindung liegt daher die Aufgabe zugrunde, einen Montageträger zu schaffen, dessen oberer Querträger als Schloßquerträger ein hohes Trägheitsmoment aufweist und die Kühlluftdurchlaßfläche nur in einem vernachlässigbaren Umfang reduziert.

Diese Aufgabe wird mit einem Montageträger gelöst, der die Merkmale des Patentanspruchs 1 aufweist.

Für die Erfindung ist wesentlich, daß durch die sich unterseitig an den oberen Querträger anschließende Gitterstruktur, die auch als Gittertragwerk mit Fachwerkcharakter bezeichnet werden kann, sich im oberen Bereich des Montageträgers das Trägheitsmoment erheblich erhöhen läßt. So ist der obere Querträger des Montageträgers in einen oberen, geschlossenen Teil, der mit der Dichtrippe endet, und in einen unteren Teil untergliedert, der einen hohen Anteil von freier Durchströmfläche aufweist, die mit für den Kühlluftdurchlaß genutzt werden kann. So kann der Bereich des oberen Querträgers des Montageträgers mit der Gitterstruktur in voller Fläche vor einer der Kühlkomponenten angeordnet werden, wobei die Gitterstruktur so gestaltet ist, daß der an dieser Kühlkomponente auftretende Verlust ihres Wirkungsgrades vernachlässigbar ist.

### Kurzbeschreibung der Zeichnungsabbildungen

Die Erfindung wird nachfolgend anhand der Zeichnung an einem Ausführungsbeispiel noch näher erläutert. Dabei zeigen:

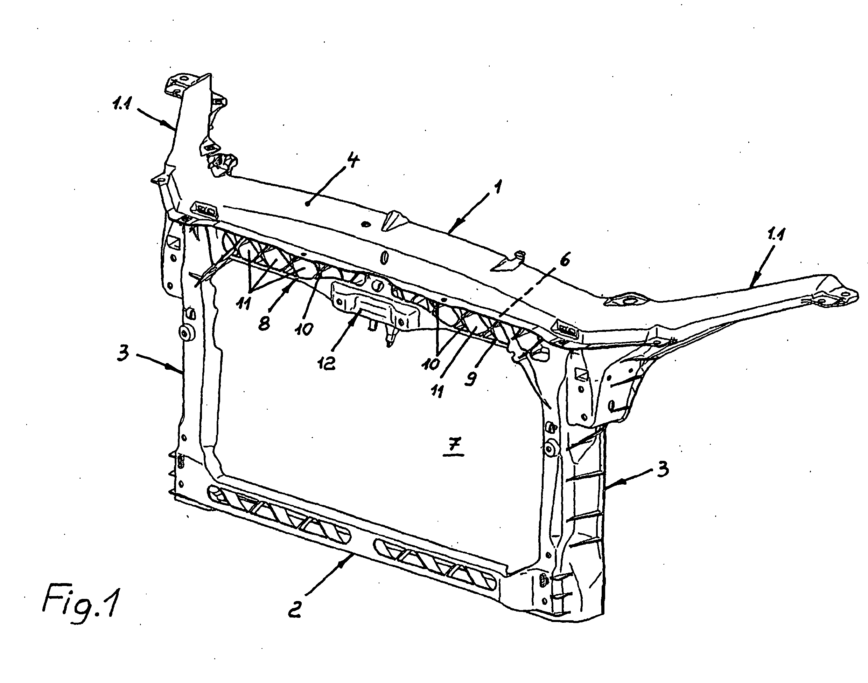

Fig. 1 einen Montageträger in perspektivischer Vorder ansicht und

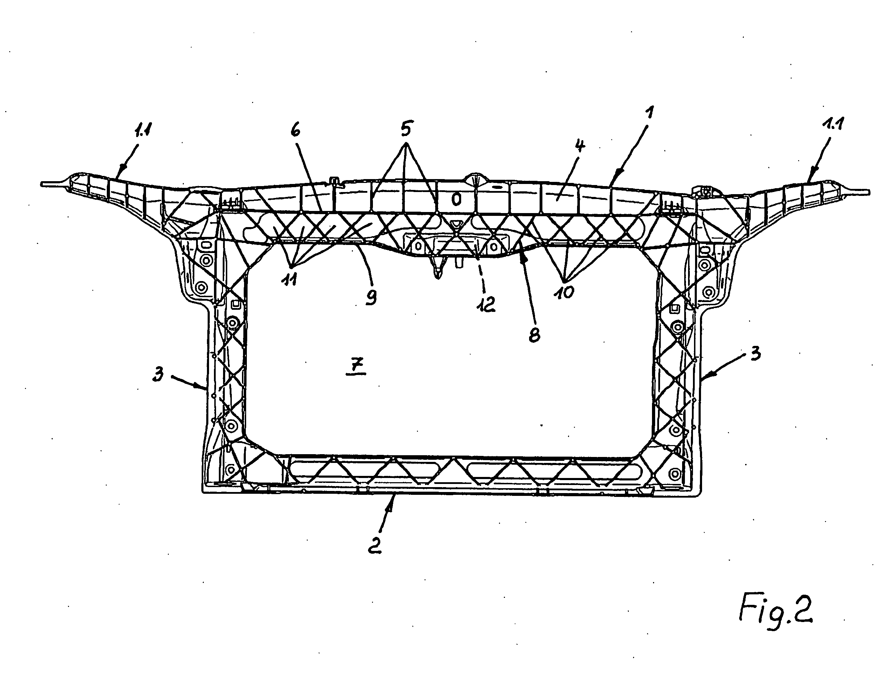

Fig. 2 den Montageträger nach Figur 1 in Rückansicht.

### Weg zur Ausführung der Erfindung

Im einzelnen weist der in der Zeichnung dargestellte Montageträger einen oberen Querträger 1, einen unteren Querträger 2 und Seitenträger 3 auf, welche den oberen Querträger 1 und den unteren Querträger 2 einstückig miteinander verbinden. Dadurch hat der Montageträger die Grundform eines im wesentlichen rechteckigen Rahmens, wobei von den beiden oberen Rahmenecken schräg nach hinten hin Befestigungsarme 1.1 abstehen, in denen sich der obere Querträger 1 fortsetzt.

Der obere Querträger 1 ist ein Profilträger und weist einen U-förmigen oder C-förmigen Querschnitt auf, dessen Öffnungsseite an der Hinterseite des Montageträgers liegt. Zur Frontseite des Montageträgers hin ist der obere Querträger 1 mit einer geschlossenen Wandung 4 versehen, an deren Rückseite sich im Hohlprofil des oberen Querträgers 1 Versteifungsstege 5 anschließen. Der Querträger 1 kann als Vollkunststoffteil ausgeführt sein, in bevorzugter Ausbildung ist er ein Hybridbauteil aus Versteifungskomponenten eines festen Werkstoffs, wie Metall, und aus daran angespritztem Kunststoff. In diesem Fall ist die Wandung 4 des oberen Querträgers 1 in Hybridbauweise ausgeführt, während die Versteifungsstege 5 ausschließlich aus dem angespritzten Kunststoff bestehen. Der untere, nach hinten hin wegstehende Steg des den Querträger 1 bildenden Profilträgers bildet eine Dichtrippe 6, an die zumindest eine Kühlerkomponente des betreffenden Fahrzeugs angesetzt wird, so daß in dem Verbindungsbereich zwischen dem oberen Querträger 1 des Montageträgers und dieser Kühlerkomponente ein die Kühlerkomponente umgehender Kühlluft-Bypass nicht besteht. So begrenzt die Dichtrippe 6 nach oben hin eine Kühlluftdurchlaßfläche 7, die im übrigen durch den unteren Querträger 2 und die Seitenträger 3 des Montageträgers umschlossen ist.

Im Bereich der Dichtrippe 6 schließt an den oberen Querträger 1 des Montageträgers eine Gitterstruktur 8 nach unten hin an, die in die Kühlluftdurchlaßfläche 7 hineinragt und in der Einbaulage des Montageträgers an der Anströmseite vor der zumindest einen Kühlerkomponenten des Kraftfahrzeugs angeordnet ist. Die Gitterstruktur 8 besteht aus einem Steg 9, der mit Abstand von der Dichtrippe 6 des oberen Querträgers 1 verläuft und mit der Dichtrippe 6 mittels Zwischenstegen 10 verbunden ist. Die Zwischenstege 10 sind paarweise als einander kreuzende Stege ausgeführt, sie sind ebenso wie der Steg 9 als Flachstege ausgebildet. Mit ihrer Breitenrichtung liegen die Zwischenstege 10 und ebenso der Steg 9 in der Strömungsrichtung der durch die Gitterstruktur 8 hindurchzulassenden Kühlluft, die durch Gitteröffnungen 11 zwischen den Stegen 9, 10 hindurchtritt. Die gesamte Öffnungsfläche dieser Gitteröffnungen 11 gehört mit zu der Kühlluftdurchlaßfläche 7. Durch die Dimensionen und Geometrien der Stege 9, 10 ist ein minimaler Strömungswiderstand für die Kühlluft erreicht, so daß der durch die Gitterstruktur 8 grundsätzlich unvermeidbare Verlust an Kühlleistung der dahinter liegenden Kühlerkomponente vernachlässigbar ist.

Bei der Ausführung des oberen Querträgers 1 als Hybridbauteil bildet der Kunststoff, der an die Versteifungskomponenten des festeren Werkstoffs angespritzt ist, die Zwischenstege 10 und den unteren Endsteg 9 der Gitterstruktur 8. Die Gitterstruktur kann im Eckbereich des Montagerahmens zwecks weiterer Versteifung des oberen Querträgers 1 mit den Seitenträgern 3 verbunden sein, was voraussetzt, daß sich die Gitterstruktur 8 über die gesamte Länge des oberen Querträgers 1 erstreckt. Grundsätzlich kann der obere Querträger 1 auch nur in Teilbereichen zur Unterstützung unterseitig die Gitterstruktur 8 aufweisen, wie es bei Tragwerken in Fachwerkstruktur vorgesehen werden kann.

Die Gitterstruktur 8 an der Unterseite des oberen Querträgers 1 des Montageträgers hat die Funktion eines Fachwerks, um die Tragfähigkeit des oberen Querträgers 1 zu erhöhen. Diese Maßnahme ist im Hinblick darauf erforderlich, daß der obere Querträger 1 das Schloß für die Verriegelung der Fronthaube des betreffenden Fahrzeugs trägt. So können im Bereich der Gitterstruktur 8 Aufnahmevorrichtungen 12 für das Haubenschloß angeordnet sein, die in die Gitterstruktur 8 integriert sein können.

## Patentansprüche

1. Montageträger für Frontendmodule von Personenkraftwagen oder Kleinstkraftwagen mit einem rahmenförmige Aufbau, der eine Kühlluftdurchlaßfläche (7) umschließt und einen oberen Querträger (1), einen unteren Querträger (2) und diese verbindende Seitenträger (3) aufweist, wobei der obere Querträger (1) zur Aufnahme eines Haubenschlosses als Profilträger mit einer geschlossenen Wandung (4) ausgebildet ist, die eine an die Kühlluftdurchlaßfläche (7) angrenzende Dichtrippe (6) zum luftdurchtrittssperrenden Anschluß einer Kühlerkomponente bildet,
**dadurch gekennzeichnet,**
**daß** der obere Querträger (1) mittels einer an die Dichtrippe (6) anschließenden, in die Kühlluftdurchlaßfläche (7) hineinragenden Gitterstruktur (8) versteift ist, deren Gitteröffnungen (11) mit ihrer gesamten Öffnungsfläche einen Teil der Kühlluftdurchlaßfläche (7) bilden.

2. Montageträger nach Anspruch 1,
**dadurch gekennzeichnet,**
**daß** die Gitterstruktur (8) aus einem mit Abstand von der Dichtrippe (6) des oberen Querträgers (1) verlaufenden Steg (9) und aus diesen Steg (9) mit der Dichtrippe (6) verbindenden Zwischenstegen (10) besteht.

3. Montageträger nach Anspruch 2,
**dadurch gekennzeichnet,**
**daß** der Steg (9) und die Zwischenstege (10) der Gitterstruktur (8) Flachstege sind, deren Breitenrichtungen in der Kühlluftdurchlaßrichtung liegen.

4. Montageträger nach Anspruch 2 oder 3,
**dadurch gekennzeichnet,**
**daß** die Zwischenstege (10) der Gitterstruktur (8) paarweise einander kreuzend ausgebildet sind.

5. Montageträger nach einem der Ansprüche 1 - 4,
**dadurch gekennzeichnet,**
**daß** die Gitterstruktur (8) sich über die gesamte Länge des oberen Querträgers (1) erstreckt.

6. Montageträger nach einem der Ansprüche 1 - 5,
**dadurch gekennzeichnet,**
**daß** in der Gitterstruktur (8) Aufnahmevorrichtungen (12) für das Haubenschloß integriert sind.

7. Montageträger nach einem der Ansprüche 1 - 6,
**dadurch gekennzeichnet,**
**daß** zumindest der obere Querträger (1) als Hybridbauteil aus Versteifungskomponenten eines festen Werkstoffs und aus daran angespritztem Kunststoff ausgeführt ist, wobei die Gitterstruktur (8) ausschließlich aus dem angespritzten Kunststoff gebildet ist.

8. Montageträger nach einem der Ansprüche 1 - 7,
**dadurch gekennzeichnet,**
**daß** der obere Querträger (1) als Profilträger ausgeführt und im Querschnitt U-förmig oder C-förmig ist, wobei die Öffnungsseite des U- oder C-Profils zur Abströmseite des Kühlluftdurchlasses hin angeordnet ist und der zur Kühlluftdurchlaßfläche (7) hin liegende Steg des Profils die Dichtrippe (6) bildet, an welche die Gitterstruktur (8) anschließt.

## Claims

1. Assembly support for front end modules of motor cars or small motor vehicles, having a frame-like structure which surrounds a cooling air throughput area (7) and an upper cross member (1), a lower cross member (2) and side members (3) connecting these, whereby the upper cross member (1) is formed, for the purpose of receiving a bonnet catch, as a profiled support with a closed wall element (4) which forms a sealing rib (6) adjacent to the cooling air throughput area (7) for the connection of a cooling component in such a way that the passage of air is blocked,
**characterised in that**
the upper cross member (1) is stiffened by means of a lattice structure (8) joined to the sealing rib (6) and projecting into the cooling air throughput area (7), of which the lattice openings (11) form a part of the cooling air throughput area (7) with their entire opening area.

2. Assembly support according to claim 1,
**characterised in that**
the lattice structure (8) consists of a web (9) extending at a distance from the sealing rib (6) of the upper cross member (1) and intermediate webs (10) connecting said web (9) to the sealing rib (6).

3. Assembly support according to claim 2,
**characterised in that**
the web (9) and the intermediate webs (10) of the lattice structure (8) are flat webs, of which the width extends in the direction of cooling air throughput.

4. Assembly support according to claim 2 or 3,
**characterised in that**
the intermediate webs (10) of the lattice structure (8) are formed so as to cross each other in pairs.

5. Assembly support according to one of the claims 1 to 4,
**characterised in that** the lattice structure (8) extends over the entire length of the upper cross member (1).

6. Assembly support according to one of the claims 1 to 5,
**characterised in that**
receiving devices (12) for the bonnet catch are integrated into the lattice structure (8).

7. Assembly support according to one of the claims 1 to 6,
**characterised in that**
at least the upper cross member (1) is formed as a hybrid component comprising stiffening components of a solid material and plastic sprayed thereon, whereby the lattice structure (8) is formed exclusively from the sprayed-on plastic.

8. Assembly support according to one of the claims 1 to 7,
**characterised in that**
the upper cross member (1) is formed as a profiled support and has a U-shaped or C-shaped cross-section, whereby the opening side of the U-shaped or C-shaped profile faces the flowing-away side of the cooling air passage and the web of the profile facing the cooling air throughput area (7) forms the sealing rib (6), to which the lattice structure (8) is joined.

## Revendications

1. Support de montage pour modules frontaux de voitures particulières ou de camionnettes, avec une structure en forme de cadre qui entoure une surface laissant passer l'air de refroidissement et présente une traverse supérieure (1), une traverse inférieure (2) et des supports latéraux (3) qui réunissent celles-ci, la traverse supérieure (1) étant, pour recevoir une serrure de capot, réalisée sous la forme d'un support profilé avec une paroi fermée (4) qui forme une nervure d'étanchéité (6), adjacente à la surface de passage de l'air de refroidissement (7), pour un raccordement à un composant de radiateur, obturant le passage de l'air,
**caractérisé en ce que**
la traverse supérieure (1) est renforcée au moyen d'une structure adjacente, en treillis (8), faisant saillie dans la surface de passage de l'air de refroidissement, dont les mailles (11) forment, avec toute leur surface ouverte, une partie de la surface de passage de l'air de refroidissement (7).

2. Support de montage selon la revendication 1,
**caractérisé en ce que**
la structure en treillis (8) consiste en une traverse (9), qui s'étend à distance de la nervure d'étanchéité (6), et en des traverses intermédiaires (10) qui relient cette traverse (9) à la nervure d'étanchéité (6).

3. Support de montage selon la revendication 2,
**caractérisé en ce que**
la traverse (9) et les traverses intermédiaires (10) de la structure en treillis (8) sont des traverses plates dont les extensions en largeur sont orientées dans la direction de passage de l'air.

4. Support de montage selon revendication 2 ou 3,
**caractérisé en ce que**
les traverses intermédiaires (10) de la structure en treillis (8) se croisent deux par deux.

5. Support de montage selon l'une des revendications 1 à 4,
**caractérisé en ce que**
la structure en treillis (8) s'étend sur toute la longueur de la traverse supérieure (1).

6. Support de montage selon l'une des revendications 1 à 5,
**caractérisé en ce que**,
des dispositifs de réception (12) sont intégrés dans la structure en treillis (8) pour la serrure de capot.

7. Support de montage selon l'une des revendications 1 à 6,
**caractérisé en ce que**
la traverse supérieure (1), au moins, est réalisée sous la forme d'un élément hybride formé de composants de renforcement en matériau résistant, sur lesquels est injectée une matière synthétique, la structure en treillis (8) étant formée exclusivement par la matière synthétique injectée.

8. Support de montage selon l'une des revendications 1 à 7,
**caractérisé en ce que**
la traverse supérieure (1) est exécutée sous la forme d'un support profilé et présente une section transversale en forme de U ou de C, le côté ouvert du profilé en U ou en C étant disposé vers le côté aval du passage d'air de refroidissement et la traverse du profilé orienté vers la surface de passage de l'air de refroidissement (7) formant la nervure d'étanchéité (6) à laquelle se raccorde la structure en treillis (8).
